# FASCICULE DE BREVET EUROPEEN

(11) **EP 1 550 509 B1**
(45) Date de publication et mention de la délivrance du brevet: **06.06.2007**
(21) Numéro de dépôt: 04292610.5
(22) Date de dépôt: 03.11.2004
(51) Int. Cl.: B03B 9/06

(54) **Dispositif de traitement de chutes en forme de plaques notamment des plaques de platre**
Vorrichtung zur Verarbeitung von plattenförmigen Abfällen insbesondere von Gipsplatten
Apparatus for treatment of plate shaped refuse in particular of plasterboards

(30) Priorité: 03.11.2003 FR 0312843
(43) Date de publication de la demande: 06.07.2005
(73) Titulaire: Matcleaner, Lasbordes 31130 Balma (FR)
(72) Inventeur: Dupont, Eric, 31450 Donneville (FR)
(74) Mandataire: Santarelli

(56) Documents cités:
- US-B1- 6 295 794
- PATENT ABSTRACTS OF JAPAN vol. 1997, no. 07, 31 juillet 1997 (1997-07-31) & JP 09 057131 A (CHICHIBU ONODA CEMENT CORP), 4 mars 1997 (1997-03-04)

## Description

La présente invention concerne un dispositif de traitement de chutes en forme de plaques, notamment des plaques de plâtre.

Lors de la pose de plaques de plâtre pour réaliser des cloisons, on utilise des plaques de dimensions standards. Pour s'adapter aux dimensions de la cloison à réaliser, ces plaques sont découpées et les chutes ainsi formées sont jetées. Sur le chantier une benne est généralement prévue pour recevoir ces chutes. Ces dernières sont le plus souvent jetées pêle-mêle dans la benne. De ce fait, une grande partie du volume intérieur de la benne est inutilisée.

L'idée à l'origine de la présente invention est de compacter les chutes de plaques afin d'obtenir un meilleur remplissage d'une benne ainsi que de faciliter, dans le cas de plaques de plâtre, le recyclage ultérieur du plâtre contenu dans celles-ci.

Il existe des dispositifs comportant des rouleaux entre lesquels viennent passer les chutes de plaques de plâtre. Ces plaques de plâtre comportent généralement au moins une face cartonnée et une couche de plâtre. La compression des rouleaux pulvérise le plâtre et permet sa séparation de la couche cartonnée. Les documents DE-195 27 798 et US-B1-6295794 décrivent ainsi par exemple un tel dispositif. Les dispositifs connus de ce type sont destinés à être utilisés dans une déchetterie et non pas sur un chantier. Il s'agit en effet de machines d'une masse élevée, ce qui est dû notamment au fait que des forces importantes sont mises en oeuvre par ces machines.

La présente invention a alors pour but de fournir une machine permettant de traiter des chutes de plaques de plâtre en vue de les compacter. Cette machine est de préférence facilement transportable. Avantageusement, elle permet également lorsque la plaque de plâtre est associée par collage (ou autre procédé) à une couche de matériau isolant de séparer cette dernière couche de la plaque de plâtre. Cette séparation préalable autorise par la suite le recyclage du plâtre.

A cet effet, elle propose un dispositif de traitement de chutes en forme de plaques, notamment des plaques de plâtre, en vue de limiter le volume occupé par ces chutes, ce dispositif présentant en amont une entrée pour l'introduction des plaques à traiter ainsi qu'en aval une sortie des plaques traitées coopérant éventuellement avec un bac collecteur.

Selon l'invention, ce dispositif comporte en outre des premiers moyens pour entailler une plaque d'une part longitudinalement et d'autre part transversalement par rapport à son sens d'introduction dans le dispositif de traitement ainsi que des seconds moyens, pour casser la plaque entaillée le long des entailles réalisées par les premiers moyens.

Les moyens ainsi mis en oeuvre permettent de découper la chute en forme de plaque en rectangles de taille réduite. En versant en vrac de tels morceaux de plaques dans une benne, le volume est bien mieux utilisé qu'en y versant des grandes chutes.

Pour une meilleure découpe de la plaque, les premiers moyens pour entailler la plaque l'entaillent de préférence sur ses deux faces.

Dans une forme de réalisation préférée, les moyens pour entailler longitudinalement une plaque comportent un axe transversal sur lequel sont montées des lames de scie circulaires, espacées les unes des autres. Dans ce cas, on prévoit avantageusement sur une face de la plaque à traiter des lames de scie dentées. Une telle lame peut être utilisée par exemple pour l'entraînement de la plaque dans le dispositif de traitement.

Les moyens pour entailler la plaque transversalement comportent par exemple un rouleau d'axe transversal, ce rouleau présente alors avantageusement au moins un logement comportant une paroi sensiblement radiale, et une lame est fixée sur ladite paroi radiale de manière à faire saillie de la surface externe du rouleau d'une hauteur correspondant sensiblement à la profondeur souhaitée de l'entaille.

Dans cette dernière forme de réalisation, on peut prévoir que dans un même plan radial, le rouleau présente plusieurs lames radiales et que ces lames sont séparées les unes des autres par une lame placée dans un plan longitudinal et de forme circulaire. Un tel dispositif réalise donc à la fois des entailles longitudinales et transversales.

Les moyens pour casser transversalement une plaque entaillée comportent par exemple deux rouleaux d'axe transversal disposés l'un derrière l'autre dans le sens de déplacement des plaques ; un rouleau disposé au-dessus de la plaque se trouve sur la trajectoire de la face supérieure de la plaque et dévie celle-ci vers le bas et un autre rouleau disposé au-dessous de ladite plaque se trouve sur la trajectoire de la face inférieure de la plaque et dévie celle-ci vers le haut.

Les moyens pour casser longitudinalement une plaque entaillée comportent quant à eux par exemple une paire de rouleaux d'axe transversal ; un rouleau de la paire de rouleaux est disposé au-dessus de la plaque et l'autre au-dessous de ladite plaque ; la surface extérieure des rouleaux est ondulée de telle sorte que l'espace laissé libre entre les deux rouleaux pour le passage d'une plaque entaillée est d'épaisseur sensiblement constante, et cet espace libre présente une forme d'ondulation.

Dans une telle configuration, le dispositif comporte avantageusement une seconde paire de rouleaux pour casser longitudinalement une plaque entaillée, rouleaux dont la surface extérieure est ondulée et présentant entre eux un espace libre en forme d'ondulation ; la seconde paire de rouleaux est disposée en aval de la première paire de rouleaux ; les ondulations des deux paires de rouleaux présentent le même pas ; le sommet de l'ondulation de l'espace libre entre les rouleaux de la première paire de rouleaux se trouve face à un creux de l'ondulation de l'espace libre entre les rouleaux de la seconde paire de rouleaux. Cette seconde paire de rouleaux permet de réaliser une seconde cassure qui permet à coup sûr de désolidariser les morceaux les uns des autres.

Pour éviter alors que les morceaux réalisés ne tombent entre les deux paires de rouleaux, on prévoit alors avantageusement que les deux rouleaux dont la surface extérieure est ondulée se trouvant d'un même côté de la plaque à casser sont entourés par une même bande souple épousant la forme extérieure des deux rouleaux.

Dans une forme de réalisation préférée, les plaques sont destinées à être introduites dans le dispositif de telle sorte que leur axe transversal par rapport à la direction d'introduction dans le dispositif soit sensiblement horizontal ; le dispositif de traitement comporte avantageusement des éléments supérieurs se trouvant au-dessus d'une plaque lorsque celle-ci est introduite dans le dispositif et des éléments inférieurs se trouvant au-dessous de la plaque lorsque celle-ci est introduite dans le dispositif, et au moins une partie des éléments supérieurs destinés à venir au contact avec une plaque à traiter est montée mobile selon une direction sensiblement verticale.

Dans cette dernière forme de réalisation l'ensemble des pièces mobiles verticalement est de préférence suspendu élastiquement. Ceci permet de contrôler la pression exercé par cet ensemble sur les plaques à traiter.

L'ensemble des pièces rendues ainsi mobiles verticalement est par exemple relié à un châssis fixe par l'intermédiaire d'un parallélogramme articulé.

On peut également prévoir que l'ensemble des pièces mobiles verticalement porte un sabot destiné à séparer deux couches de matériaux, par exemple une couche de plâtre d'une couche d'un matériau isolant.

Des détails et avantages de la présente invention ressortiront mieux de la description qui suit, faite en référence au dessin schématique annexé sur lequel :
La figure 1 est une vue en élévation de côté d'un dispositif de traitement selon l'invention,
La figure 2 est une vue de face du même dispositif,
La figure 3 est une vue de côté du mécanisme permettant le traitement des chutes de plaques,
La figure 4 est une vue à échelle agrandie du détail A de la figure 3,
La figure 5 est une vue en coupe selon la ligne de coupe V-V de la figure 4,
La figure 6 est une vue en coupe selon la ligne de coupe VI-VI de la figure 3, et
La figure 7 est une vue à échelle agrandie du détail B de la figure 3.

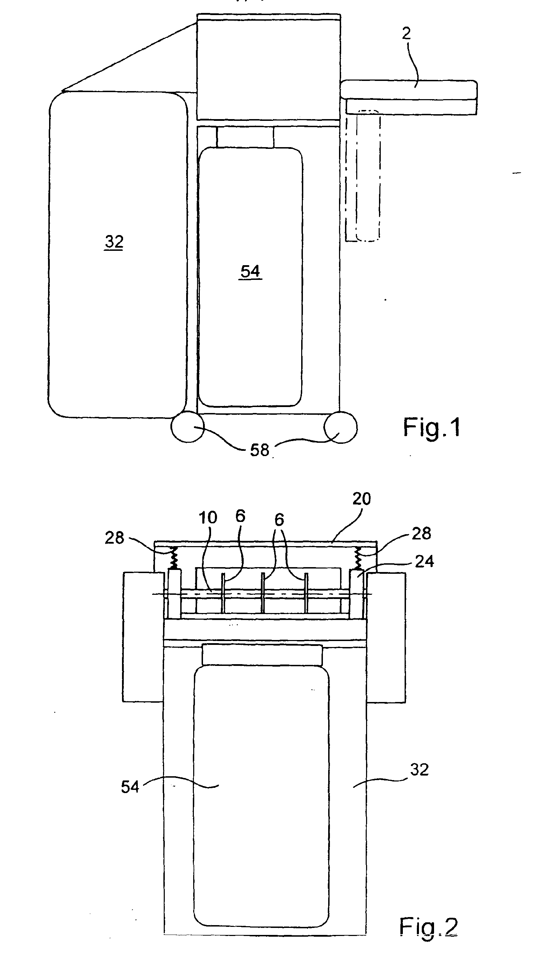

Les figures 1 et 2 représentent un dispositif destiné au traitement de plaques de plâtre. Ce dispositif est également destiné à traiter des plaques composites comportant un support en carton, une couche de plâtre et une couche de matériau isolant réalisée par exemple en mousse synthétique. Le dispositif des figures 1 et 2 permet de séparer d'une part le matériau isolant et d'autre part la couche de plâtre sur son support en carton. Cette plaque de plâtre cartonnée est ensuite découpée en pièces rectangulaires de taille prédéterminée.

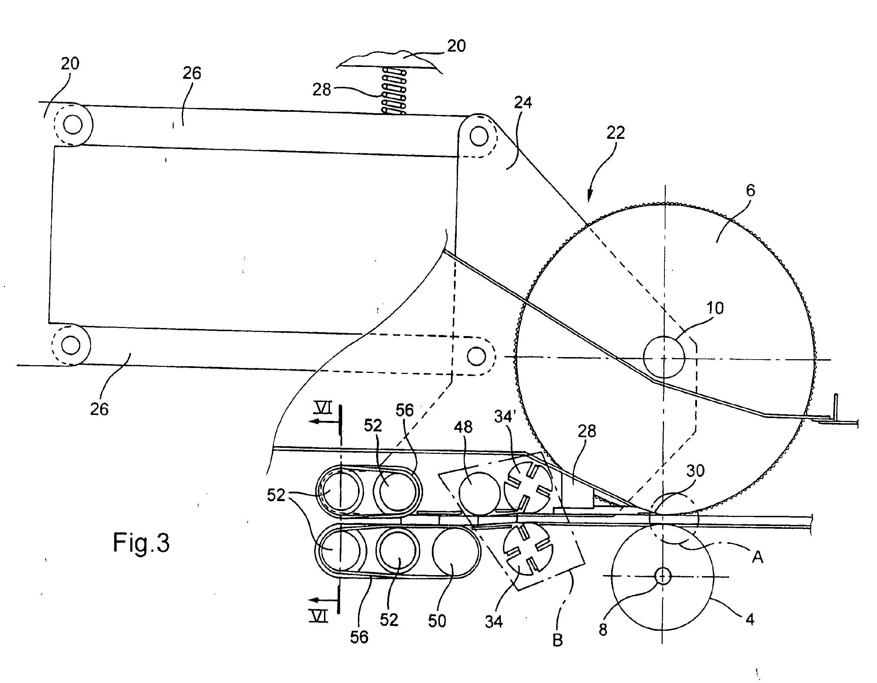

La figure 3 montre le mécanisme permettant d'une part de séparer le matériau isolant du reste de la plaque et d'autre part de découper la plaque de plâtre.

Dans la suite de la description, on suppose que la plaque de plâtre se trouve dans un plan sensiblement horizontal lorsqu'elle est introduite dans le dispositif de traitement selon l'invention. On définit ainsi une face supérieure et une face inférieure de la plaque. Sur les figures 1 et 3, la plaque est introduite dans le dispositif par la droite et se déplace vers la gauche de la figure.

On définit une direction longitudinale et une direction transversale. La direction longitudinale correspond à l'axe du sens de déplacement de la plaque dans le dispositif de traitement. La direction transversale est la direction perpendiculaire à la direction longitudinale tout en restant dans le plan de la plaque. Ainsi, sur les figures 1, 3, 4 et 7 le sens longitudinal correspond à des lignes sensiblement horizontales dans le plan de la feuille tandis que la direction transversale correspond à la direction normale à la feuille.

Comme on peut le voir sur la figure 1, la plaque à traiter qui est une chute obtenue lors d'une découpe d'une plaque de taille plus importante, est posée sur un plateau 2. Lorsqu'il s'agit d'une plaque composite avec une couche d'isolant, la couche d'isolant est orientée vers le haut.

La plaque ainsi introduite dans le dispositif passe tout d'abord entre des lames de scies inférieures 4 et des lames dentées supérieures 6. Les lames de scies inférieures 4 sont montées sur un axe transversal tandis que les roues dentées supérieures 6 sont montées sur un axe transversal 10. Les axes transversaux 8 et 10 sont disposés respectivement l'un en dessous de l'autre sensiblement dans un même plan vertical. Dans la forme de réalisation représentée au dessin (cf figure 2), il y a trois roues dentées 6 montées sur l'axe 10 et trois lames de scies 4 sur l'axe 8. Chaque roue dentée 6 fait face à une lame de scie 4.

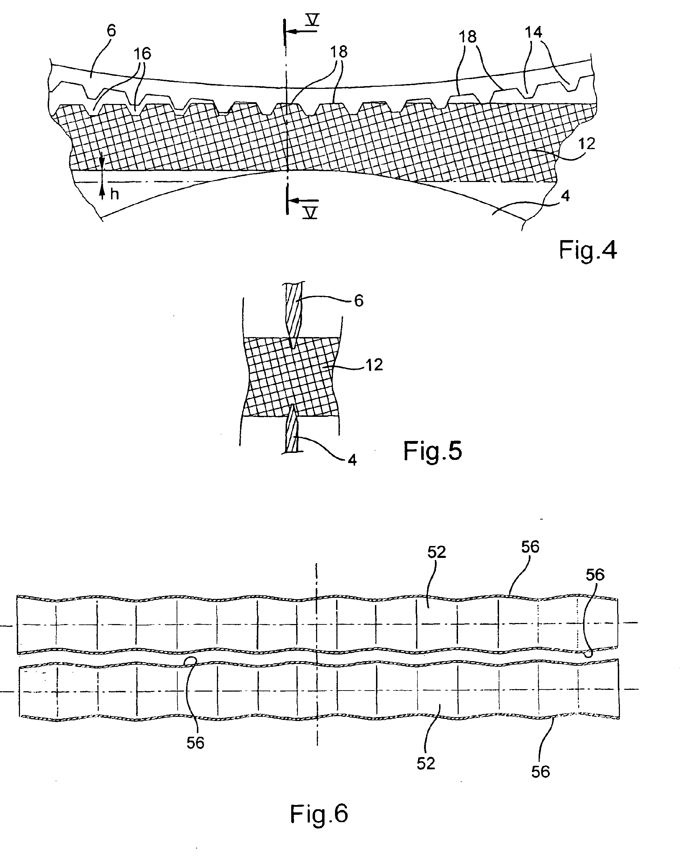

La figure 4 montre plus en détail le passage d'une plaque (12) entre une roue dentée 6 et une lame de scie 4. Sur cette figure, et la figure 5, sont hachurés sans distinction une couche de plaque et son support en carton. Les lames 4 viennent entailler la face inférieure de la plaque 12 sur une hauteur h. Cette hauteur est déterminée par la position de l'axe 8 des lames inférieures 4, le diamètre de ces lames de scies 4 et la position verticale du support de la plaque 12 à traiter.

Les roues dentées 6 viennent s'appuyer sur la face supérieure de la plaque 12. La pression exercée est telle que les dents périphériques de la roue dentée 6 pénètrent dans le plâtre de la plaque 12 en y laissant subsister des empreintes 16 tandis que les creux 18 se trouvant entre deux dents périphériques 14 successives viennent en appui sur la face supérieure de la couche de plâtre de la plaque 12. En aval des roues dentées 6 et de la lame de scie 4, c'est-à-dire à gauche sur les figures 3 et 4, la plaque introduite dans le dispositif de traitement selon l'invention présente sur sa face inférieure au moins une entaille longitudinale et sur sa face supérieure au moins une prédécoupe en pointillés.

Les roues dentées 6 assurent l'entraînement de la plaque 12 à traiter vers l'intérieur du dispositif. Ces roues dentées 6, ou plus précisément leur axe 10, sont entraînées en rotation par un moteur par l'intermédiaire par exemple d'une courroie (le moteur et la courroie n'étant pas représentés au dessin).

L'espacement entre les axes 8 et 10 pour s'adapter à l'épaisseur de la plaque 12 (carton plus plâtre) se réalise automatiquement d'une manière originale. Le dispositif de traitement décrit ici comporte un châssis fixe 20 et un ensemble mobile 22. L'ensemble mobile 22 comporte un chariot 24 sur lequel est monté par exemple l'axe 10 portant les roues dentées 6. Ce chariot 24 est relié au châssis fixe 20 par deux bras articulés 26 de manière à former un parallélogramme déformable. Ces bras 26 s'étendent sensiblement longitudinalement. On trouve par exemple une paire de bras 26 à chaque extrémité transversale du chariot 24. On a ainsi deux paires de bras 26. Les bras articulés 26 supérieurs sont reliés au châssis 20 par des moyens élastiques, par exemple des ressorts 28. L'ensemble mobile 22 est ainsi un ensemble suspendu. En fonction de la raideur des ressorts 28 et du poids total de l'ensemble mobile 22 on obtient une pression sur les plaques 12 introduites dans le dispositif selon l'invention exercée par l'intermédiaire des roues dentées 6.

En jouant ainsi sur la raideur des ressorts 28, on peut régler le dispositif de telle sorte que, comme décrit plus haut, les dents 14 des roues dentées 6 pénètrent dans le plâtre 12 tandis que les creux 18 restent en appui sur la face supérieure de la couche de plâtre de la plaque 12. Suivant l'épaisseur de la plaque de plâtre introduite dans le dispositif de traitement, l'ensemble mobile 22 s'adapte à cette épaisseur et se déplace verticalement.

L'ensemble mobile 22 porte, en aval des roues dentées 6, un sabot 28 en forme de coin. Dans la forme de réalisation représentée sur la figure 3, ce sabot 28 s'étend sur toute la largeur du dispositif destiné à recevoir une plaque de plâtre. Pour limiter l'encombrement en profondeur du dispositif, des fentes sont prévues dans le sabot 28 pour permettre le passage des roues dentées 6. Ce sabot 28 en forme de coin présente une arête vive 30 destinée à se trouver au niveau de la face supérieure de la couche de plâtre d'une plaque 12. De cette manière, lorsqu'une plaque à traiter munie d'une couche d'isolant progresse d'amont en aval dans le dispositif de traitement, le sabot 28 grâce à son arête vive 30 vient séparer la couche d'isolant de la couche de plâtre. La couche d'isolant est coupée longitudinalement par les roues dentées 6 puis est guidée vers un bac collecteur 32.

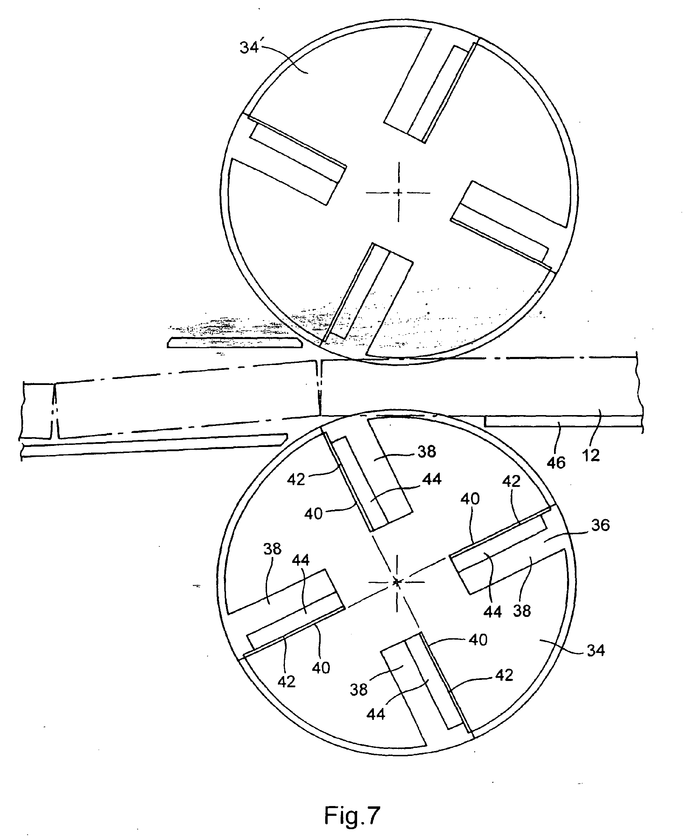

Après s'être débarrassée de la couche d'isolant, la plaque 12 entaillée longitudinalement passe entre deux rouleaux 34, 34' d'axe transversal destinés à réaliser des entailles longitudinales et transversales sur la plaque 12. Ces rouleaux 34, 34' sont représentés plus en détail sur la figure 7. Le rouleau 34 est disposé en dessous de la plaque 12 et est monté par l'intermédiaire de paliers sur le châssis fixe 20. Le rouleau 34' se trouve quant à lui au-dessus de la plaque à traiter 12 et est monté par l'intermédiaire de paliers sur l'ensemble mobile 22. Les rouleaux 24 et 34' sont de structure identique. Dans la suite, on décrit uniquement le rouleau 34.

Ce rouleau 34 comporte quatre lames circulaires 36. Ces lames circulaires sont disposées dans un plan vertical orienté longitudinalement par rapport au sens de déplacement de la plaque 12. De même que les lames de scie 4, les lames circulaires 36 entaillent la plaque 12. Ces lames circulaires 36 sont régulièrement réparties le long du rouleau 34. Dans le dispositif de traitement selon l'invention, les lames circulaires 36 sont décalées par rapport aux lames de scie 34 et les roues dentées 6. On retrouve le même pas entre deux lames 36 successives qu'entre deux lames 4 (ou 6) successives. Les lames 36 sont décalées transversalement par rapport aux lames 14 d'une valeur correspondant à la moitié de ce pas. Ainsi, le plan vertical contenant une lame dentée 6 et une lame de scie 4 est un plan médian par rapport aux plans verticaux contenant deux lames circulaires 36 voisines. De cette manière, si on introduit une plaque 12 faisant toute la largeur des rouleaux 34, 34', cette plaque présentera en aval de ces rouleaux sept entailles sensiblement équidistantes sur chacune de ces faces correspondant d'une part aux entailles réalisées au niveau des lames de scie 4 et lames dentées 6 et d'autre part des lames 36 des rouleaux 34, 34'.

Comme annoncé plus haut, les rouleaux 34, 34' réalisent également des entailles transversales. Dans la forme de réalisation représentée au dessin, le rouleau 34 comporte à chaque fois entre deux lames circulaires 36 quatre logements 38 débouchant à la périphérie du rouleau 34. Chacun de ces logements 38 présente une paroi radiale 40. Chacune de ces parois 40 porte une lame 42 s'étendant transversalement (et radialement par rapport au rouleau 34) et qui fait saillie hors du rouleau 34. Ces lames 42 sont maintenues sur la paroi 40 correspondante à l'aide d'une bride 44. Les lames 42 sont ainsi disposées à 90° les unes des autres. Les lames 42 réalisent ainsi des entailles transversales sur la plaque 12 lors de la rotation du rouleau 34, 34' sur lequel elles sont fixées. La profondeur des entailles ainsi réalisée peut être réglée en ajustant les lames 42 dans la direction radiale le long des parois 40 sur lesquelles elles sont fixées. La profondeur des entailles réalisées est déterminée par la position des lames 42 lorsque celles-ci sont dans un plan vertical, face à la plaque 12, en fonction du niveau de l'arête de cette lame 42 par rapport au niveau de la face inférieure de la plaque 12. Ce niveau de la face inférieure de la plaque 12 est déterminé par l'altitude du support 46 portant la plaque 12 lorsqu'elle passe entre les rouleaux 34, 34'. Pour les lames 42 du rouleau 34', le réglage est similaire pour agir sur la profondeur des entailles réalisées sur la face supérieure de la plaque 12.

Une fois toutes les entailles réalisées, il convient de casser la plaque de plâtre le long des entailles réalisées.

La première cassure transversale est réalisée en sortie des rouleaux 34, 34'. Pour ce faire, un rouleau 48 d'axe transversal est disposé sur la trajectoire horizontale de la face supérieure de la plaque 12 et vient contraindre celle-ci à s'abaisser. De ce fait une cassure se réalise au niveau d'une entaille de la face supérieure de la plaque 12. Il se peut, notamment à cause de la présence d'une couche de carton servant de support à la couche de plâtre de la plaque 12, que cette cassure ne permette pas de désolidariser complètement la bande cassée du reste de la plaque 12. On prévoit alors un second rouleau 50 disposé cette fois ci en dessous de la plaque 12 sur la trajectoire de la face inférieure de la plaque 12 de manière à orienter celle-ci vers le haut. Ainsi, si la bande précédemment cassée n'était pas entièrement désolidarisée du reste de la plaque 12, ce deuxième mouvement achève sûrement la cassure initiée par le premier rouleau 48 et permet la désolidarisation totale de la bande ainsi découpée du reste de la plaque.

Cette bande présente encore des entailles longitudinales sur ses faces supérieure et inférieure. Les cassures longitudinales correspondantes sont alors réalisées par les quatre rouleaux ondulés 52 représentés sur les figures 3 et 6, en aval des rouleaux 48 et 50.

Les rouleaux ondulés 52 sont disposés transversalement. De même que le rouleau 48, les rouleaux 52 disposés au-dessus de la plaque 12 sont portés par l'ensemble mobile 22. Les rouleaux ondulés 52, de même que le rouleau 50, sont quant à eux montés sur le châssis fixe 20.

La figure 6 montre deux rouleaux ondulés 52 en coupe transversale. On remarque alors qu'en se déplaçant le long de l'axe d'un rouleau ondulé 52, ce rouleau ondulé 52 présente une section sensiblement circulaire dont le diamètre croît puis décroît. On obtient ainsi à la surface de ces rouleaux 52 des sommets et des creux.

Deux rouleaux 52 sont disposés les uns au-dessus des autres de telle sorte qu'un sommet de l'un de ces rouleaux se trouve face à un creux de l'autre rouleau. Ainsi, l'espace laissé libre entre deux rouleaux 52 se trouvant l'un au-dessus de l'autre présente la forme d'une bande en vaguelette. Il peut s'agir d'une forme en dent de scies ou bien une forme plus adoucie sinusoïdale. Cette bandelette présente ainsi, dans le sens vertical, des creux et des sommets. Chaque creux et chaque sommet sont disposés dans le prolongement longitudinal d'une lame ayant réalisé sur une face de la plaque 12 une entaille. Les quatre rouleaux ondulés 52 sont disposés de telle sorte que lorsqu'une entaille réalisée dans la plaque 12 passe au niveau de la première paire superposée de rouleaux ondulés 52 au niveau d'un creux elle passe ensuite au niveau de la seconde paire de rouleaux ondulés 52 au niveau d'un sommet, ou inversement. On réalise de la sorte de manière sûre la cassure le long de toutes les entailles longitudinales de la bande détachée préalablement de la plaque 12.

Ainsi, la plaque 12 introduite en amont de la machine décrite ci-dessus est progressivement découpée en petits morceaux rectangulaires. Une fois ces morceaux réalisés, ils tombent dans un second bac collecteur 54.

Pour éviter la chute de petits morceaux entre les rouleaux ondulés 52, on prévoit d'entourer les deux rouleaux ondulés supérieurs de même que les deux rouleaux inférieurs à chaque fois par une bande souple 56 en matière synthétique épousant la forme de ces rouleaux. En ce qui concerne la bande entourant les rouleaux ondulés inférieurs, on peut prévoir que cette bande entoure également le rouleau inférieur 50. La bande souple 56 forme alors un tapis pour les morceaux de plaques de plâtre réalisés par le dispositif de traitement qui les mène vers le bac collecteur 54.

Le dispositif de traitement décrit ci-dessus présente comme première originalité de réaliser le découpage de chutes de plaques de plâtre en morceaux de forme rectangulaire. Ce traitement permet de limiter très sensiblement le volume des chutes de matériau sur un chantier. Ainsi, sur un chantier où deux, voire trois, bennes étaient nécessaires pour évacuer les chutes des cloisons de plâtre, une seule benne est nécessaire si les chutes sont d'abord traitées avec un dispositif selon l'invention. Ceci permet des économies sensibles de transport. Le coût du transport entre pour une part importante dans les frais d'enlèvement et de recyclage des gravats sur un chantier.

Le dispositif proposé est un dispositif compact, d'un poids relativement peu important. Deux personnes peuvent le porter pour le charger ou le décharger d'une camionnette. Pour faciliter la manipulation du dispositif, on peut avantageusement prévoir d'équiper celui-ci de roulettes 58.

L'utilisation de ce dispositif est également très facile. Il suffit d'alimenter électriquement la machine pour faire tourner les divers rouleaux et mettre en place le plateau 2 facilitant l'introduction des plaques dans le dispositif. On peut prévoir par exemple, comme suggéré sur la figure 1, d'avoir un plateau monté pivotant entre une position rangée verticale le long du châssis fixe 20 et une position active horizontale.

Le dispositif décrit ci-dessus présente comme autre avantage important de permettre la séparation d'une couche d'isolant d'une couche de plâtre. Il n'est pas connu dans l'art antérieur de réaliser une telle séparation. Cette séparation facilite par la suite le recyclage du plâtre et de l'isolant.

Le dispositif décrit ci-dessus présente également l'avantage de s'adapter automatiquement à toutes les épaisseurs de plaques à traiter. Il est possible, sans faire aucun réglage, de passer alternativement des plaques d'épaisseur différentes.

La présente invention ne se limite pas à la forme de réalisation décrite ci-dessus à titre d'exemple non limitatif. Elle concerne également toutes les variantes de réalisation à la portée de l'homme du métier dans le cadre des revendications ci-après.

Ainsi, on pourrait avoir une machine sans ajustement automatique en fonction de la hauteur des plaques utilisées. On pourrait prévoir un réglage pour chaque épaisseur de plaque. Les positions correspondant aux différentes épaisseurs pourraient être indexées. On peut également prévoir une machine universelle qui conviendrait pour plusieurs épaisseurs de plaque dans une plage prédéterminée d'épaisseurs.

On remarque également l'originalité de la manière dont une couche d'isolant peut être séparée d'une plaque de plâtre. On divulgue donc ici également un dispositif avec un ensemble supérieur tel l'ensemble mobile décrit qui peut être mobile comme dans la description faite plus haut, soit fixe, et qui porte un sabot pour réaliser la séparation entre une couche en matériau isolant d'une couche de plâtre. Une première machine pourrait réaliser la séparation de l'isolant de la couche de plâtre et une seconde traiter par la suite la couche de plâtre ainsi débarrassée de son isolant. Le traitement ultérieur pourrait être un traitement par découpage comme révélé plus haut ou par tout autre moyen.

L'ensemble mobile est décrit comme étant relié par des bras articulés sur le châssis fixe. Bien entendu, d'autres formes de réalisation pourraient permettre d'avoir un ensemble mobile. Le chariot décrit pourrait par exemple être monté sur des glissières verticales. On peut également envisager un plateau portant le chariot mobile ce plateau étant suspendu par trois (ou plus) ressorts.

La façon dont est entaillée longitudinalement et transversalement la plaque à traiter est donnée à titre d'illustration. D'autres formes de réalisation pourraient être envisagées. Par exemple pour la réalisation des entailles transversales, on pourrait envisager de réaliser celles-ci à l'aide de lames de scie rectilignes et non pas circulaires. Ces lames s'abaisseraient à intervalle de temps régulier pour réaliser une entaille au niveau de la plaque défilant dans le dispositif.

## Revendications

1. Dispositif de traitement de chutes en forme de plaques (12), notamment des plaques de plâtre, en vue de limiter le volume occupé par ces chutes, ce dispositif présentant en amont une entrée pour l'introduction des plaques (12) à traiter ainsi qu'en aval une sortie des plaques traitées coopérant éventuellement avec un bac collecteur (54), des premiers moyens pour entailler une plaque (12) d'une part longitudinalement et d'autre part transversalement par rapport à son sens d'introduction dans le dispositif de traitement, **caractérisé en ce qu**'il comporte des seconds moyens, pour casser la plaque (12) entaillée le long des entailles réalisées par les premiers moyens.

2. Dispositif de traitement selon la revendication 1, **caractérisé en ce que** les premiers moyens pour entailler la plaque (12) l'entaillent sur ses deux faces.

3. Dispositif de traitement selon l'une des revendications 1 ou 2, **caractérisé en ce que** les moyens pour entailler longitudinalement une plaque (12) comportent un axe transversal (8, 10) sur lequel sont montées des lames de scie (4, 6) circulaires, espacées les unes des autres.

4. Dispositif de traitement selon la revendication 3, **caractérisé en ce que** sur une face de la plaque (12) à traiter les lames de scie (6) sont dentées.

5. Dispositif de traitement selon l'une des revendications 1 à 4, **caractérisé en ce que** les moyens pour entailler la plaque transversalement comportent un rouleau (34, 34') d'axe transversal, **en ce que** ce rouleau (34, 34') présente au moins un logement (38) comportant une paroi (40) sensiblement radiale, et **en ce qu'**une lame (42) est fixée sur ladite paroi (40) radiale de manière à faire saillie de la surface externe du rouleau (34, 34') d'une hauteur correspondant sensiblement à la profondeur souhaitée de l'entaille.

6. Dispositif de traitement selon la revendication 5, **caractérisé en ce que** dans un même plan radial, le rouleau (34, 34') présente plusieurs lames (42) radiales et **en ce que** ces lames (42) sont séparées les unes des autres par une lame (36) placée dans un plan longitudinal et de forme circulaire.

7. Dispositif de traitement selon l'une des revendications 1 à 6, **caractérisé en ce que** les moyens pour casser transversalement une plaque entaillée comportent deux rouleaux (48, 50) d'axe transversal disposés l'un derrière l'autre dans le sens de déplacement des plaques (12), **en ce qu'**un rouleau (48) disposé au-dessus de la plaque (12) se trouve sur la trajectoire de la face supérieure de la plaque (12) et dévie celle-ci vers le bas, et **en ce qu'**un autre rouleau (50) disposé au-dessous de ladite plaque (12) se trouve sur la trajectoire de la face inférieure de la plaque (12) et dévie celle-ci vers le haut.

8. Dispositif de traitement selon l'une des revendications 1 à 7, **caractérisé en ce que** les moyens pour casser longitudinalement une plaque entaillée comportent une paire de rouleaux (52) d'axe transversal, **en ce qu'**un rouleau (52) de la paire de rouleaux est disposé au-dessus de la plaque (12) et l'autre au-dessous de ladite plaque (12), **en ce que** la surface extérieure des rouleaux (52) est ondulée de telle sorte que l'espace laissé libre entre les deux rouleaux (52) pour le passage d'une plaque (12) entaillée est d'épaisseur sensiblement constante, et **en ce que** cet espace libre présente une forme d'ondulation.

9. Dispositif de traitement selon la revendication 8, **caractérisé en ce qu**'il comporte une seconde paire de rouleaux (52) pour casser longitudinalement une plaque (12) entaillée, rouleaux (52) dont la surface extérieure est ondulée et présentant entre eux un espace libre en forme d'ondulation, en ce que la seconde paire de rouleaux (52) est disposée en aval de la première paire de rouleaux (52), en ce que les ondulations des deux paires de rouleaux (52) présentent le même pas, en ce que le sommet de l'ondulation de l'espace libre entre les rouleaux (52) de la première paire de rouleaux (52) se trouve face à un creux de l'ondulation de l'espace libre entre les rouleaux (52) de la seconde paire de rouleaux (52).

10. Dispositif de traitement selon la revendication 9, **caractérisé en ce que** les deux rouleaux (52) dont la surface extérieure est ondulée se trouvant d'un même côté de la plaque (12) à casser sont entourés par une même bande souple (56) épousant la forme extérieure des deux rouleaux (52).

11. Dispositif de traitement selon l'une des revendications 1 à 10, **caractérisé en ce que** les plaques (12) sont destinées à être introduites dans le dispositif de telle sorte que leur axe transversal par rapport à la direction d'introduction dans le dispositif soit sensiblement horizontal, **en ce que** le dispositif de traitement comporte des éléments supérieurs se trouvant au-dessus d'une plaque (12) lorsque celle-ci est introduite dans le dispositif et des éléments inférieurs se trouvant au-dessous de la plaque (12) lorsque celle-ci est introduite dans le dispositif, et **en ce qu'**au moins une partie des éléments supérieurs destinés à venir au contact avec une plaque à traiter est montée mobile selon une direction sensiblement verticale.

12. Dispositif de traitement selon la revendication 11, **caractérisé en ce que** l'ensemble (22) des pièces mobiles verticalement est suspendu élastiquement.

13. Dispositif de traitement selon l'une des revendications 11 ou 12, **caractérisé en ce que** l'ensemble (22) des pièces mobiles verticalement est relié à un châssis fixe (20) par l'intermédiaire d'un parallélogramme (26) articulé.

14. Dispositif de traitement selon l'une des revendications 11 à 13, **caractérisé en ce que** l'ensemble (22) des pièces mobiles verticalement porte un sabot (28) destiné à séparer deux couches de matériaux.

## Claims

1. Device for treating scrap in the form of boards (12), in particular plasterboard, aiming to limit the volume occupied by this scrap, this device presenting upstream an input for the introduction of the boards (12) to be treated as well as downstream an output for the treated boards which may cooperate with a collection tray (54), first means to cut a board (12) longitudinally on one hand and transversally on the other hand in relation to the direction of insertion in the treatment device, **characterised in that** it includes a second means, to break the cut board (12) along the cuts created by the first means.

2. Treatment device according to claim 1, **characterised in that** the first means to cut the board (12) cut it on its two sides.

3. Treatment device according to one of claims 1 or 2, **characterised in that** the means to cut a board (12) longitudinally include a transversal axis (8, 10) on which are mounted the blades (4, 6) of a circular saw, spaced apart from one another.

4. Treatment device according to claim 3, **characterised in that** on one side of the board (12) to be treated the saw blades (6) are serrated.

5. Treatment device according to one of claims 1 to 4, **characterised in that** the means to cut the board transversally include a transversal axis roller (34, 34'), **in that** this roller (34, 34') presents at least one housing (38) including an approximately radial wall (40), and **in that** a blade (42) is affixed to said radial wall (40) so as to protrude out from the external surface of the roller (34, 34') at a height that corresponds approximately to the desired depth of the cut.

6. Treatment device according to claim 5, **characterised in that** in a same radial plane, the roller (34, 34') presents several radial blades (42) and that these blades (42) are separated from one another by a blade (36) positioned in a longitudinal plane and of circular form.

7. Treatment device according to one of claims 1 to 6, **characterised in that** the means to transversally break a cut board include two transversal axis rollers (48, 50) positioned one behind the other in the direction of board (12) movement; **in that** one roller (48) positioned above the board (12) is located on the trajectory of the upper side of the board (12) and deviates the latter downwards, and **in that** another roller (50) positioned below said board (12) is located on the trajectory of the lower side of the board (12) and deviates the latter upwards.

8. Treatment device according to one of claims 1 to 7, **characterised in that** the means to longitudinally break a cut board include a pair of transversal axis rollers (52), **in that** one roller (52) of the pair of rollers is positioned above the board (12) and the other below said board (12), **in that** the outside surface of the rollers (52) is rippled in such a way that the space left free between the two rollers (52) for the passage of a cut board (12) is of an approximately constant thickness, and **in that** this free space presents a form of ripple.

9. Treatment device according to claim 8, **characterised in that** it includes a second pair of rollers (52) to longitudinally break a cut board (12), rollers (52) of which the outside surface is rippled and presenting between them a free space in the form of a ripple, **in that** the second pair of rollers (52) is positioned downstream of the first pair of rollers (52), **in that** the ripples of the two pairs of rollers (52) present the same pitch, **in that** the crest of the ripple and the free space between the rollers (52) of the first pair of rollers (52) is located across from a ripple trough of the free space between the rollers (52) of the second pair of rollers (52).

10. Treatment device according to claim 9, **characterised in that** the two rollers (52) of which the outside surface is rippled being located on the same side of the board (12) to be broken are surrounded by a same flexible strip (56) that hugs the outside form of the two rollers (52).

11. Treatment device according to one of claims 1 to 10, **characterised in that** the boards (12) are destined to be introduced into the device such that their transversal axis in relation to the direction of insertion into the device is approximately horizontal, **in that** the treatment device includes upper items located above a board (12) when the latter is introduced into the device and lower items located below the board (12) when the latter is introduced into the device, and **in that** at least one part of the upper items destined to come into contact with a board to be treated is raised mobile according to an approximately vertical direction.

12. Treatment device according to claim 11, **characterised in that** the unit (22) of pieces that are mobile vertically is suspended elastically.

13. Treatment device according to claim 11 or 12, **characterised in that** the unit (22) of pieces that are mobile vertically is connected to a fixed chassis (20) using an articulated parallelogram (26).

14. Treatment device according one of claims 11 to 13, **characterised in that** the unit (22) of pieces that are mobile vertically bears a shoe (28) destined to separate two layers of material.

## Patentansprüche

1. Vorrichtung zum Bearbeiten von Abfällen in Form von Platten (12), insbesondere von Gipsplatten zur Begrenzung des von solchen Abfällen benötigten Volumens, wobei die Vorrichtung einen Einlass zum Einführen der zu bearbeitenden Platten (12) und einen Auslass zum Entsorgen der bearbeiteten Platten besitz, wobei dieser Auslass mit einem Sammelbehälter (54) zusammenwirken kann und die Vorrichtung erste Mittel zum Anbringen von Einschnitten auf den Platte einerseits in Längsrichtung und andererseits in Querrichtung in Bezug auf die Einführrichtung in die Vorrichtung besitzt,
**dadurch gekennzeichnet, dass** sie zweite Mittel besitzt, mit denen die Platten an den durch die ersten Mittel angebrachten Einkerbungen gebrochen werden.

2. Bearbeitungsvorrichtung nach Anspruch 1, **dadurch gekennzeichnet, dass** die ersten Mittel zum Anbringen von Einschnitten auf den Platte (12) diese auf beiden Seite anbringen.

3. Bearbeitungsvorrichtung nach einem der Ansprüche 1 oder 2, **dadurch gekennzeichnet, dass** die ersten Mittel zum Anbringen von Einschnitten in Längsrichtung auf den Platte (12) eine Querachse (8, 10) besitzen, auf der kreisförmige Sägeblätter (4, 6) in bestimmten Abständen zueinander angebracht sind.

4. Bearbeitungsvorrichtung nach Anspruch 3, **dadurch gekennzeichnet, dass** auf einer Seite der zu bearbeitenden Platte (12) die Sägeblätter (6) gezahnt sind.

5. Bearbeitungsvorrichtung nach einem der Ansprüche 1 bis 4, **dadurch gekennzeichnet, dass** die Mittel zum Anbringen von Einschnitten in Querrichtung auf den Platte eine Walze mit quergerichteter Achse (34, 34') besitzen, dass diese Walze (34, 34') mindestens eine Aufnahme (38) besitzt, die eine weitgehend radial ausgerichtete Wand (40) aufweist, und dass ein Schneidblatt (42) so an der radial ausgerichteten Wand (40) befestigt ist, dass es über die Außenseite der Walze (34, 34') mit einer Höhe übersteht, die der gewünschten Tiefe der Einschnitte entspricht.

6. Bearbeitungsvorrichtung nach Anspruch 5, **dadurch gekennzeichnet, dass** die Walze (34, 34') auf ein und derselben radialen Ebene mehrere radiale Schneidblätter (42) besitzt und diese Blätter (42) voneinander durch ein Schneidblatt (36) getrennt sind, das in Längsrichtung ausgerichtet und kreisförmig ist.

7. Bearbeitungsvorrichtung nach einem der Ansprüche 1 bis 6, **dadurch gekennzeichnet, dass** die Mittel zum Brechen in Querrichtung zwei Walzen (48, 50) mit Querachse besitzen, die in der Beförderungsrichtung der Platte (12) gesehen hintereinander angeordnet sind, wobei die eine, über der Platte (12) angeordnete Walze (48) auf der Oberseite der Platte (12) aufliegt und diese nach unten drückt, während die andere, unter der Platte (12) angeordnete Walze (50) auf der Unterseite der Platte (12) aufliegt und diese nach oben drückt.

8. Bearbeitungsvorrichtung nach einem der Ansprüche 1 bis 7, **dadurch gekennzeichnet, dass** die Mittel zum Brechen einer mit Einschnitten versehenen Platte in Längsrichtung ein Walzenpaar (52) mit Querachse besitzen, dass die eine Walze (52) des Walzenpaars über der Platte (12) und die andere unter der Platte (12) angeordnet ist, dass die Außenfläche der Walzen (52) gewellt ist, so dass der Abstand zwischen den Walzen (52) zum Durchführen der mit Einschnitten versehenen Platte (12) weitgehend konstant, jedoch wellenförmig ist.

9. Bearbeitungsvorrichtung nach Anspruch 8, **dadurch gekennzeichnet, dass** sie ein zweites Walzenpaar (52) besitzt, um eine mit Einschnitten versehene Platte (12) in Längsrichtung zu brechen, wobei die Außenflächen dieser Walzen (52) gewellt sind und der Abstand zwischen ihnen wellenförmig ist, dass das zweite Walzenpaar (52) hinter dem ersten Walzenpaar (52) angeordnet ist, dass die Wellungen der beiden Walzenpaare (52) sind aufeinander abgestimmt, so dass sich der Scheitel einer Welle des Abstands zwischen den Walzen (52) des ersten Walzenpaars (52) der Vertiefung einer Welle des Abstands zwischen den Walzen (52) des zweiten Walzenpaars (52) gegenüber befindet.

10. Bearbeitungsvorrichtung nach Anspruch 9, **dadurch gekennzeichnet, dass** sich die beiden Walzen (52), deren Außenflächen gewellt sind und sich auf derselben Seite der zu brechenden Platte (12) befinden, von einem gemeinsamen flexiblen Band (56) umgeben sind, das sich an die Außenform der beiden Walzen (52) anschmiegt.

11. Bearbeitungsvorrichtung nach einem der Ansprüche 1 bis 10, **dadurch gekennzeichnet, dass** die Platten (12) so in die Vorrichtung eingeführt, dass ihre Querachse in Bezug auf die Einführrichtung in die Vorrichtung weitgehend waagrecht liegt, dass die Bearbeitungsvorrichtung vorzugsweise obere Elemente, die sich über der Platte (12) befinden, wenn diese eingeführt wird, sowie untere Elemente besitzt, die sich unter der Platte (12) befinden, wenn diese eingeführt wird, und dass mindestens ein Teil der mit der zu bearbeitenden Platte in Berührung kommenden oberen Elemente in einer weitgehend senkrechten Richtung beweglich angebracht ist.

12. Bearbeitungsvorrichtung nach Anspruch 11, **dadurch gekennzeichnet, dass** die Baugruppe (22) der senkrecht beweglichen Teile elastisch gefedert ist.

13. Bearbeitungsvorrichtung nach einem der Ansprüche 11 oder 12, **dadurch gekennzeichnet, dass** die Baugruppe (22) der senkrecht beweglichen Teile über eine schwenkbare Scherenkonstruktion (26) mit einem festen Rahmen (20) verbunden ist.

14. Bearbeitungsvorrichtung nach einem der Ansprüche 11 bis 13, **dadurch gekennzeichnet, dass** die Baugruppe (22) der senkrecht beweglichen Teile einen Trennklotz (28) besitzt, der dazu dient, zwei Werkstoffe voneinander zu trennen.
